(19) Europäisches Patentamt
European Patent Office
Office européen des brevets

(11) EP 3 872 123 A1

(12) EUROPEAN PATENT APPLICATION

(43) Date of publication:
**01.09.2021 Bulletin 2021/35**

(21) Application number: **21162506.6**

(22) Date of filing: **05.10.2017**

(51) Int Cl.:
***C08J 9/26*** *(2006.01)*
***C08K 5/098*** *(2006.01)*
***C08K 5/42*** *(2006.01)*
***B01D 67/00*** *(2006.01)*
***H01M 50/40*** *(2021.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.10.2016 US 201662404934 P**
**30.01.2017 EP 17153832**

(62) Document number(s) of the earlier application(s) in accordance with Art. 76 EPC:
**17786862.7 / 3 523 365**

(71) Applicant: **Solvay Specialty Polymers USA, LLC.**
**Alpharetta, GA 30005-3914 (US)**

(72) Inventors:
- **ROLLER, David, Blake**
**deceased (US)**
- **BRANHAM, Kelly D.**
**Woodstock, GA 30188 (US)**
- **DI NICOLO', Emanuele**
**21055 Gorla Minore (VA) (IT)**
- **CAMPANELLI, Pasquale**
**20812 Limbiate (IT)**
- **JEOL, Stéphane**
**69230 Saint-Genis-Laval (FR)**

(74) Representative: **Ferri, Isabella**
**Solvay S.A.**
**Viale Lombardia, 20**
**20021 Bollate (MI) (IT)**

Remarks:
This application was filed on 15-03-2021 as a divisional application to the application mentioned under INID code 62.

(54) **POROUS ARTICLE COMPRISING A POLYMER AND AN ADDITIVE, PROCESSES FOR THEIR PREPARATION AND USE THEREOF**

(57) The present invention relates to polymer compositions (C) for the preparation of porous article, notably micro-porous membranes or hollow fibers. More particularly, the present invention relates to a process of preparing a porous article from a blend of at least one semi-crystalline or amorphous polymer (P) with an additive followed by a step of shaping the article and contacting the article with water to dissolve the additive and create an interconnected pore network within the shaped article.

EP 3 872 123 A1

## Description

### FIELD OF THE INVENTION

The present invention relates to polymer compositions for the preparation of porous article, notably microporous membranes. More particularly, the present invention relates to a process of preparing a porous article from a blend of at least one semi-crystalline or amorphous polymer with an additive followed by a step of shaping the article and contacting the article with water to dissolve the additive and create an interconnected pore network within the shaped article.

### BACKGROUND

Porous polymeric membranes are used in a wide variety of applications. They can be prepared using different processes.

The phase inversion methods are currently the most commonly used ones. Phase inversion refers to a process of membrane formation where polymer solutions become set in a semi-solid gel phase by precipitation. In the Non-Solvent Induced Phase Separation (NIPS) process, a homogeneous polymeric solution (also referred to as "dope solution") containing a polymer, a suitable solvent and/or a co-solvent is typically processed by casting into a film and then brought to precipitation by contacting it with a non-solvent medium. In the Thermal Induced Phase Separation (TIPS) process, precipitation is obtained by decreasing the temperature of the polymeric solution. These methods use solvents, such as N-Methyl-2-pyrrolidone (NMP), N,N-dimethyl formamide (DMF), diethyl phthalate (DEP), dibutyl phthalate (DBP) or dioctyl phthalate (DOP). The use of solvents generates substantial environmental and disposal problems. There have been many active research efforts to replace the use of solvents with environmentally friendly alternatives.

Another method known as the template-leaching technique can be used to prepare porous membranes from polymers which do not dissolve in common organic solvents. In this technique, a homogeneous film is prepared from a mixture of membrane matrix material and a leachable component. The leachable component can be a soluble low molecular weight substance or even a macromolecular material such as poly(vinyl alcohol) (PVA) or poly(ethylene glycol) (PEG). After the film has been prepared, the leachable component is removed by a suitable chemical treatment, and a porous structure is formed as a result. One drawback of this method is the low thermal stability of PEG and PVA that degrades at temperatures above 300°C.

US 5,064,580 discloses a method for preparing a microporous membrane from poly(ether ether ketone) (PEEK) polymers and a plasticizer, which is capable of dissolving at least a portion of the PEEK polymer at the extrusion or casting temperature. The method comprises a step consisting in leaching the membranes to remove at least a portion of the plasticizer.

US 6,887,408 discloses a process for the preparation of porous articles of PAEK. The process comprises forming the PEEK/PEI blend, forming the shaped article from the blend by extrusion, molding or casting, decomposing the PEI into low molecular weight fragments in the shaped article by chemical treatment, and removing the low molecular weight fragments from the article. Chemical reagents that removed the PEI fragments include for example ammonia, hydrazine, N-Methyl-2-pyrrolidone (NMP), N,N-dimethyl formamide (DMF), and the like.

GB 920,229 relates to the production of microporous olefinic polymers (mainly polyethylene and polypropylene polymers) using a water-soluble anionic surfactant.

There is still a need to provide porous articles, made of amorphous or semi-crystalline polymers, prepared by an environmentally friendly process, which does not use solvents such as NMP or DMF, or does not involve any radiation source. Another object of the present invention is to provide a simple and cost-effective process for preparing these porous articles.

### SUMMARY OF THE INVENTION

An object of the present invention is to provide a polymer composition (C) suitable to prepare a porous polymer article, for example a membrane or hollow fibers.

According to one embodiment, the article is made of a semi-crystalline polymer, for example a poly(ether ether ketone) (PEEK) or a poly(phenylene sulfide) (PPS), presenting valuable thermal properties, mechanical properties (i.e. stiffness to prevent pore collapse), chemical resistance and known to be insoluble in most common solvents.

Another object of the present invention is to provide a simple and cost-effective process for the preparation of these porous articles, the process not using solvents such as NMP or DMF or not involving an irradiation source.

According to one embodiment of the invention, this process comprises a step consisting in processing or shaping the polymer composition into an article, for example by extrusion, and a step consisting in contacting the article with water so as to dissolve one of the polymer composition components, herein called "additive", thereby creating a pore network within the shaped article. The inventors have surprisingly found that certain additives, which are water-soluble,

can be compounded homogeneously in various polymer compositions, notably semi-crystalline polymer compositions, withstanding harsh conditions that is to say notably not degrading at high temperatures (for example the ones used in the compounding). The homogeneous repartition of the additive within the polymer composition, along with an adjusted quantity of the same within the composition, offer the possibility to create an interconnected pore network into the shaped article by a step consisting in dissolution into water.

According to the invention, the polymer compositions (C) of the present invention comprise at least 28 wt. %, based on the total weight of the polymer composition (C), of the additive.

## DETAILED DESCRIPTION OF PREFERRED EMBODIMENTS

The present invention relates to a polymer composition (C) comprising at least one polymer (P), which can be semi-crystalline or amorphous, and at least 28 wt. %, by weight of the polymer composition, of at least one additive. This composition is used to prepare porous articles, for example microporous membranes or hollow fibers, to be used in a wide application spectrum covering filtration in general (microfiltration and ultrafiltration), food and dairy industries, wastewater treatment, hemodialysis, battery separators and reverse osmosis pretreatment. More precisely, a homogenous article (e.g. a film or a membrane) is prepared from the mixture of the semi-crystalline and/or amorphous polymer and the additive. After the shaped article (e.g. a film or a membrane) has been prepared, the additive, which is water-soluble by nature, is removed from the shaped article by immersion into water. A porous structure presenting an interconnected pore network is formed as a result (e.g. a porous film or a porous membrane). The shaped porous articles obtained with these components, according to this process, have been shown not only to present a high porosity but also good mechanical properties and chemical resistance. For the sake of clarity, throughout the present application :

- "melting temperature (Tm)" or "Tm" or "melting point" means the melting temperature measured by differential scanning calorimetry (DSC) according to ASTM D3418 at 20°C/min as described in details in the examples;
- the term "halogen" includes fluorine, chlorine, bromine, and iodine, unless indicated otherwise;
- the adjective "aromatic" denotes any mono- or polynuclear cyclic group (or moiety) having a number of $\pi$ electrons equal to 4n+2, where n is 1 or any positive integer; an aromatic group (or moiety) can be an aryl and arylene group (or moiety).

The composition, articles and porous articles of this invention comprise at least one semi-crystalline or amorphous polymer.

According to the invention, the polymer (P), which can be amorphous or semi-crystalline, is selected from the group consisting of a poly(aryl ether ketone) (PAEK), a poly(aryl ether sulfone) (PAES), a polyarylene sulfide (PAS), a polyetherimide (PEI), a poly(phenyl ether) (PPE), a polycarbonate (PC), a polyamide (PA), a polyphenylene (PP), a polyamideimide (PAI) and a fluorinated polymer.

When the polymer is a PEAK, it is preferably a poly (ether ether ketone) (PEEK), a poly(ether ketone ketone) (PEKK), a poly(ether ketone) (PEK) or a copolymer of PEEK and poly(diphenyl ether ketone) (PEEK-PEDEK copolymer).

When the polymer is a PAES, it is preferably a polyphenylsulfone (PPSU), a polyethersulfone (PES) or a polysulfone (PSU).

When the polymer is a PAS, it is preferably a poly(*para*-phenylene sulfide) (PPS).

When the polymer is a fluoropolymer, it is preferably a polyvinylidene difluoride (PVDF), a polytetrafluoroethylene (PTFE) or a perfluoroalkoxy alkanes (PFA).

Generally, the polymers in the polymer composition may have a weight average molecular weight (Mw) ranging from 10,000 g/mol to 150,000 g/mol, preferably from 20,000 g/mol to 100,000 g/mol or from 40,000 to 95,000 g/mol. The weight average molecular weight can be determined by gel permeation chromatography using ASTM D5296 with polystyrene standards.

In some embodiments, the polymer composition includes one, two, three, four, or more different polymers selected from those described herein.

### *Poly(aryl ether ketone)s (PAEK)*

As used herein, a poly(aryl ether ketone) (PAEK) denotes any polymer comprising more than 50 mol. % of recurring units ($R_{PAEK}$) comprising a Ar'-C(=O)-Ar* group, where Ar' and Ar*, equal to or different from each other, are aromatic groups. The recurring units ($R_{PAEK}$) may be selected from the group consisting of units of formulae (J-A) to (J-D) below:

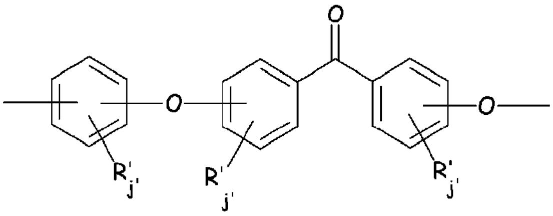

(J-A)

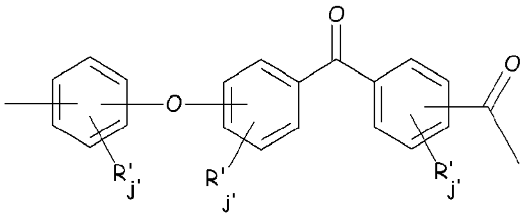

(J-B)

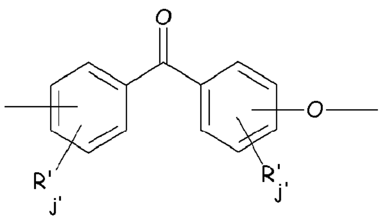

(J-C)

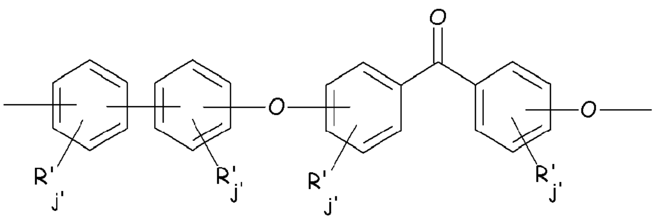

(J-D)

where

- each of R', equal to or different from each other, is selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium; and
- j' is zero or an integer ranging from 1 to 4.

In recurring unit ($R_{PAEK}$), the respective phenylene moieties may independently have 1,2-, 1,4- or 1,3-linkages to the other moieties different from R' in the recurring unit ($R_{PAEK}$). Preferably, the phenylene moieties have 1,3- or 1,4-linkages, more preferably they have a 1,4-linkage.

In recurring units ($R_{PAEK}$), j' is preferably at each occurrence zero so that the phenylene moieties have no other substituents than those linking the main chain of the polymer.

In some embodiments, the PAEK is poly(ether ether ketone) (PEEK). As used herein, a poly(ether ether ketone) (PEEK) denotes any polymer comprising more than 50 mol. % of recurring units ($R_{PAEK}$) of formula (J'-A) :

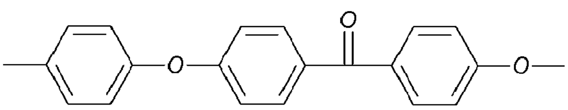

(J'-A)

Preferably at least 60 mol. %, 70 mol. %, 80 mol. %, 90 mol. %, 95 mol. %, 99 mol. %, and most preferably all of recurring units ($R_{PAEK}$) are recurring units (J'-A).

In another preferred embodiment, the PAEK is poly(ether ketone ketone) (PEKK). As used herein, a poly (ether ketone ketone) (PEKK) denotes any polymer comprising more than 50 mol. % of recurring units ($R_{PAEK}$) of formula (J'-B) and formula (J"-B):

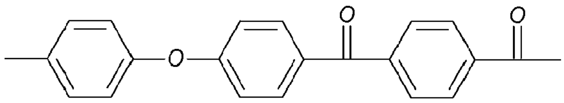

(J'-B)

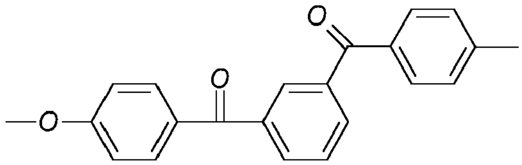

(J''-B)

Preferably at least 60 mol. %, 70 mol. %, 80 mol. %, 90 mol. %, 95 mol. %, 99 mol. %, and most preferably all of recurring units ($R_{PAEK}$) are a combination of recurring units (J'-B) and (J"-B).

In yet another preferred embodiment, the PAEK is poly(ether ketone) (PEK). As used herein, a poly (ether ketone) (PEK) denotes any polymer comprising more than 50 mol. % of recurring units ($R_{PAEK}$) of formula (J'-C) :

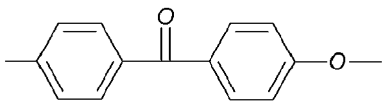

(J'-C)

Preferably at least 60 mol. %, 70 mol. %, 80 mol. %, 90 mol. %, 95 mol. %, 99 mol. %, and most preferably all of recurring units ($R_{PAEK}$) are recurring units (J'-C).

In some embodiments, the PAEK is a PEEK-PEDEK copolymer. As used herein, a PEEK-PEDEK copolymer denotes any polymer comprising more than 50 mol. % of recurring units ($R_{PAEK}$) of formula (J'-A) (PEEK recurring unit) and formula (J'-D) (poly(diphenyl ether ketone)(PEDEK) recurring unit) :

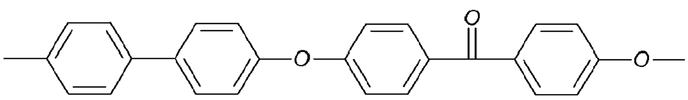

(J'-D)

The PEEK-PEDEK copolymer may include relative molar proportions of recurring units (J'-A) and (J'-D) (PEEK/PEDEK) ranging from 95/5 to 60/40. Preferably the sum of recurring units (J'-A) and (J'-D) represents at least 60 mol. %, 70 mol. %, 80 mol. %, 90 mol. %, 95 mol. %, 99 mol. %, of recurring units in the PAEK. In some aspects, recurring units (J'-A) and (J'-D) represent all of the recurring units in the PAEK.

Most preferably, the PAEK is PEEK or PEEK-PEDEK. KETASPIRE® PEEK is commercially available from Solvay Specialty Polymers USA, LLC. Excellent results were obtained when the polymer used to prepare porous membrane was PEEK or PEEK-PEDEK.

***Poly(aryl ether sulfone)s (PAES)***

For the purpose of the present invention, a poly(aryl ether sulfone) (PAES) denotes any polymer comprising at least 50 mol. % of recurring units ($R_{PAES}$) of formula (K) :

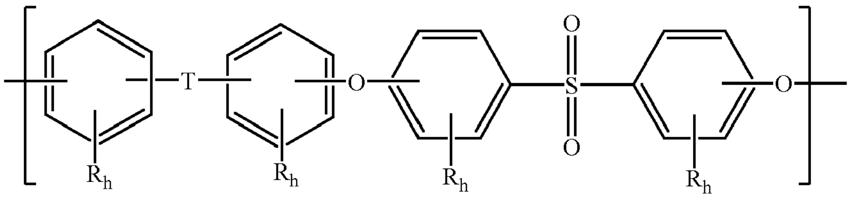

(K)

where

(i) each R, equal to or different from each other, is selected from a halogen, an alkyl, an alkenyl, an alkynyl, an aryl, an ether, a thioether, a carboxylic acid, an ester, an amide, an imide, an alkali or alkaline earth metal sulfonate, an

alkyl sulfonate, an alkali or alkaline earth metal phosphonate, an alkyl phosphonate, an amine, and a quaternary ammonium;

(ii) each h, equal to or different from each other, is an integer ranging from 0 to 4; and

(iii) T is selected from the group consisting of a bond, a sulfone group [-S(=O)$_2$-], and a group -C($R_j$)($R_k$)-, where $R_j$ and $R_k$, equal to or different from each other, are selected from a hydrogen, a halogen, an alkyl, an alkenyl, an alkynyl, an ether, a thioether, a carboxylic acid, an ester, an amide, an imide, an alkali or alkaline earth metal sulfonate, an alkyl sulfonate, an alkali or alkaline earth metal phosphonate, an alkyl phosphonate, an amine, and a quaternary ammonium. $R_j$ and $R_k$ are preferably methyl groups.

Preferably at least 60 mol. %, 70 mol. %, 80 mol. %, 90 mol. %, 95 mol. %, 99 mol. %, and most preferably all of recurring units in the PAES are recurring units ($R_{PAES}$).

In one embodiment, the PAES is a polyphenylsulfone (PPSU). As used herein, a polyphenylsulfone (PPSU) denotes any polymer comprising more than 50 mol. % of recurring units of formula (K'-A):

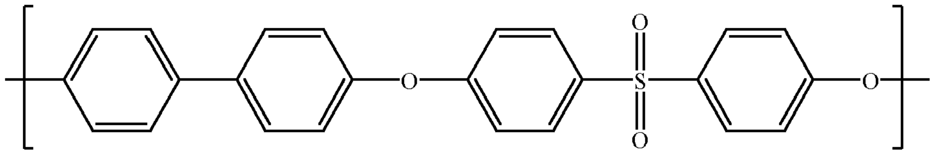
(K'-A).

Preferably at least 60 mol. %, 70 mol. %, 80 mol. %, 90 mol. %, 95 mol. %, 99 mol. %, and most preferably all of the recurring units in the PPSU are recurring units of formula (K'-A).

PPSU can be prepared by known methods and is notably available as RADEL® PPSU from Solvay Specialty Polymers USA, L.L.C.

In some embodiments, the PAES is a polyethersulfone (PES). As used herein, a polyethersulfone (PES) denotes any polymer comprising at least 50 mol. % of recurring units of formula (K'-B):

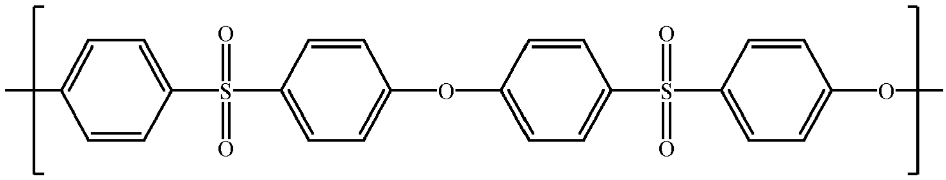
(K'-B).

Preferably at least 60 mol. %, 70 mol. %, 80 mol. %, 90 mol. %, 95 mol. %, 99 mol. %, and most preferably all of the recurring units in the PES are recurring units of formula (K'-B).

PES can be prepared by known methods and is notably available as VERADEL® PESU from Solvay Specialty Polymers USA, L.L.C.

In some embodiments, the PAES is a polysulfone (PSU). As used herein, a polysulfone (PSU) denotes any polymer comprising at least 50 mol. % of recurring units of formula (K'-C):

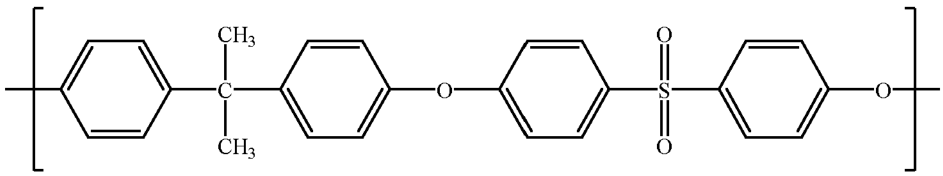
(K'-C).

Preferably at least 60 mol. %, 70 mol. %, 80 mol. %, 90 mol. %, 95 mol. %, 99 mol. %, and most preferably all of the recurring units in the PSU are recurring units of formula (K'-C).

PSU can be prepared by known methods and is available as UDEL® PSU from Solvay Specialty Polymers USA, L.L.C.

***Polyarylene Sulfide (PAS)***

For the purpose of the present invention, the expression "polyarylene sulfide (PAS)" is intended to denote any polymer comprising more than 50 mol. % of recurring units ($R_{PAS}$) of formula -(Ar'-S)-, where Ar' is an aromatic group.

Preferably at least 60 mol. %, 70 mol. %, 80 mol. %, 90 mol. %, 95 mol. %, 99 mol. %, and most preferably all of the recurring units in the PAS are recurring units (RPAS).

Nonlimiting examples of PAS include poly(2,4-toluene sulfide), poly(4,4'-biphenylene sulfide), poly(*para*-phenylene sulfide) (PPS), poly(*ortho*-phenylene sulfide), poly(*meta*-phenylene sulfide), poly(xylene sulfide), poly(ethylisopropylphenylene sulfide), poly(tetramethylphenylene sulfide), poly(butylcyclohexylphenylene sulfide), poly(hexyldodecylphenylene sulfide), poly(octadecylphenylene sulfide), poly(phenylphenylene sulfide), poly-(tolylphenylene sulfide), poly(benzylphenylene sulfide), poly[octyl-4-(3-methylcyclopentyl)phenylene sulfide], and any combination thereof.

Preferably, the PAS is poly(*para*-phenylene sulfide) (PPS). As used herein, a poly(*para*-phenylene sulfide) (PPS) denotes any polymer comprising at least 50 mol. % of recurring units ($R_{PPS}$) of formula (L) :

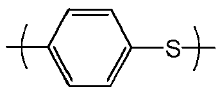
(L).

Preferably at least 60 mol. %, 70 mol. %, 80 mol. %, 90 mol. %, 95 mol. %, 99 mol. %, and most preferably all of the recurring units in the PPS are recurring units ($R_{PPS}$).

PPS is manufactured and sold under the trade name Ryton® PPS by Solvay Specialty Polymers USA, LLC. Excellent results were obtained when the polymer used to prepare porous membrane was PPS.

***Polyetherimide (PEI)***

For the purpose of the present invention, a polyetherimide (PEI) denotes any polymer comprising more than 50 mol. % of recurring units ($R_{PEI}$) comprising at least one aromatic ring, at least one imide group, as such and/or in its amic acid form, and at least one ether group. Preferably at least 60 mol. %, 70 mol. %, 80 mol. %, 90 mol. %, 95 mol. %, 99 mol. %, and most preferably all of recurring units of the PEI are recurring units ($R_{PEI}$).

Recurring units ($R_{PEI}$) may optionally further comprise at least one amide group which is not included in the amic acid form of an imide group.

The recurring units ($R_{PEI}$) are advantageously selected from the group consisting of following formulae (M), (N), (O), (P) and (Q), and mixtures thereof:

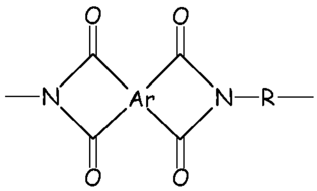
formula (M)

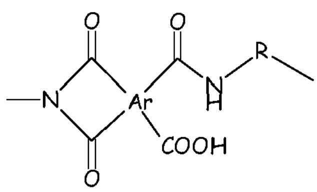
formula (N)

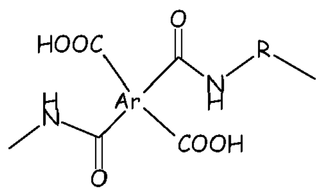
formula (O);

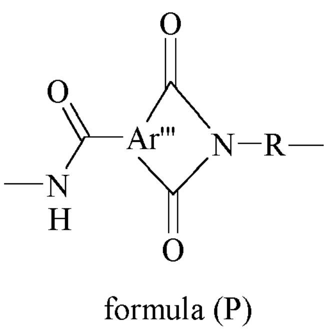
formula (P)

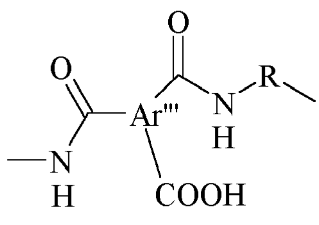
formula (Q)

where in formulae (M)-(Q) :

Ar are tetravalent aromatic moieties and Ar'" are trivalent aromatic moieties independently selected from the group consisting of a substituted or unsubstituted, saturated, unsaturated or aromatic monocyclic and polycyclic group having 5 to 50 carbon atoms; and

R is a divalent radical of the general formula (S) :

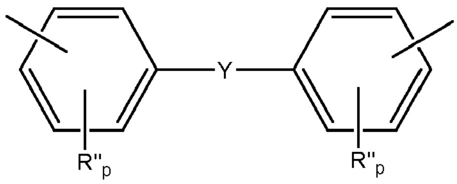

(S)

where (i) Y is selected from the group consisting of alkylenes of 1 to 6 carbon atoms, in particular $-C(CH_3)_2$; (ii) R" is independently selected from the group consisting of hydrogen, halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium; and (iii) p is independently 0, 1, 2, 3 or 4; provided that at least one of Ar, Ar''' and R comprise at least one ether group wherein the ether group is present in the polymer chain backbone.

In a preferred embodiment, at least 50 mol. % of the recurring units ($R_{PEI}$) are recurring units selected from the group consisting of those of formula (T) in imide form, their corresponding amic acid forms of formulae (T'-A) and (T'-B), and mixtures thereof:

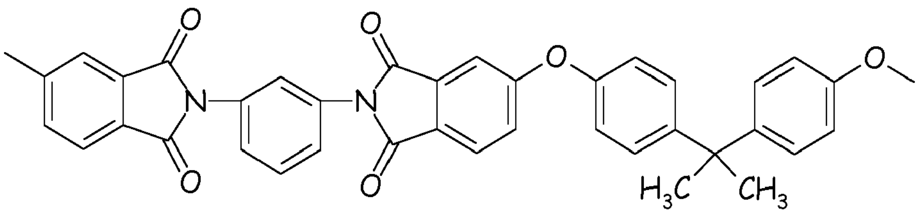

(T)

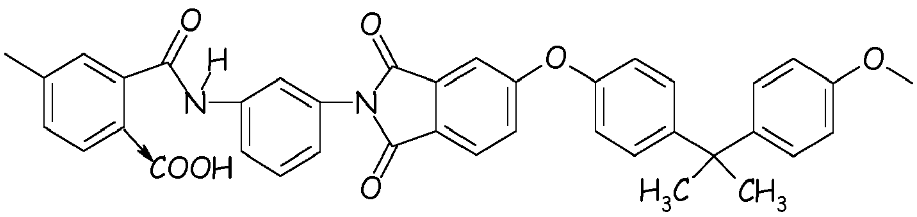

(T'-A)

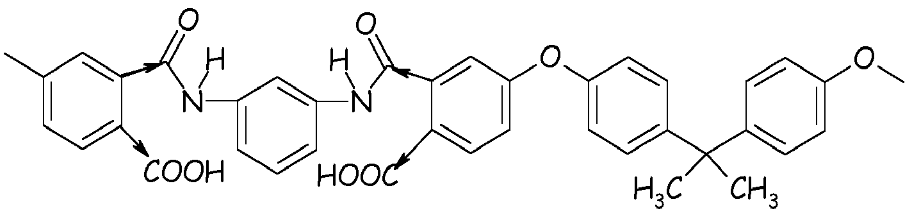

(T'-B)

where in formulae (T'-A) and (T'-B) the "→" denotes isomerism so that in any recurring unit the groups to which the arrows point may exist as shown or in an interchanged position.

In a another preferred embodiment, at least 50 mol. % of the recurring units ($R_{PEI}$) are recurring units selected from the group consisting of those of formula (U) in imide form, their corresponding amic acid forms of formulae (U'-A) and (U'-B), and mixtures thereof:

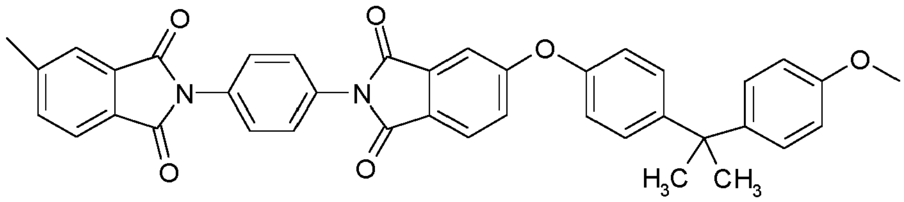

(U)

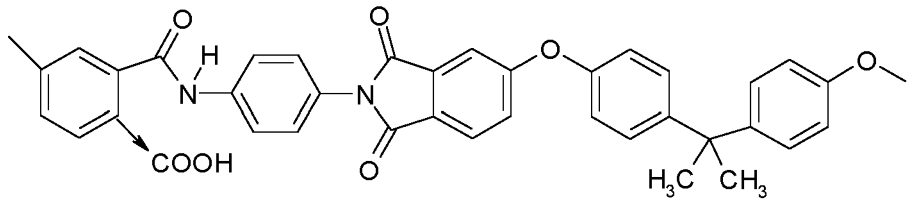

(U'-A)

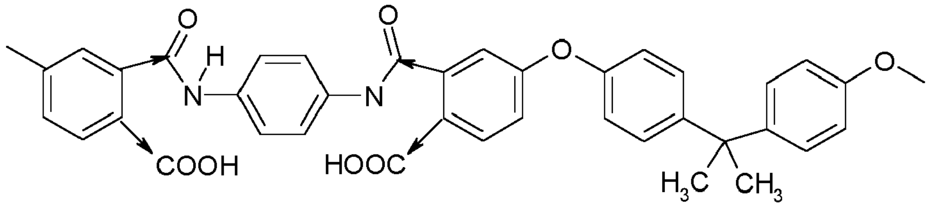

(U'-B)

wherein in formulae (U'-A) and (U'-B) the "→" denotes isomerism so that in any recurring unit the groups to which the arrows point may exist as shown or in an interchanged position.

Preferably at least 60 mol. %, 70 mol. %, 80 mol. %, 90 mol. %, 95 mol. %, 99 mol. %, and most preferably all of recurring units ($R_{PEI}$) are selected from the group consisting of those of formulae (T), (T'-A), (T'-B), and mixtures thereof or (U), (U'-A), (U'-B), and mixtures thereof.

***Poly(phenyl ether) (PPE)***

For the purpose of the present invention, a poly(phenyl ether) (PPE denotes a polymer comprising more than 50 mol. % of recurring units ($R_{PPE}$) of formula (W) :

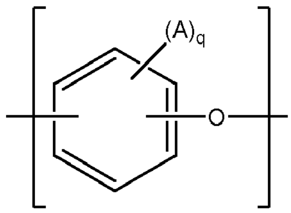

(W)

where

(i) A are independently selected from a C1- C30 alkyl groups, and
(ii) q is 0, 1, 2, 3 or 4.

Preferably at least 60 mol. %, 70 mol. %, 80 mol. %, 90 mol. %, 95 mol. %, 99 mol. %, and most preferably all recurring units in the PPE are recurring units (RPPE).

Preferably, A represents $CH_3$ and q is 2.

Preferably the phenylene moieties in the PPE have 1,4-linkages.

***Polycarbonates (PC)***

For the purpose of the present invention, a polycarbonate (PC) denotes a polymer comprising more than 50 wt. % of the recurring units ($R_{PC}$) comprising at least one optionally substituted arylene group and at least one carbonate group (-O-C(=O)-O).

The arylene group contained in the recurring units ($R_{PC}$) is preferably selected from optionally substituted phenylenes and naphthylenes and can substituted or unsubstituted.

The recurring units ($R_{PC}$) can be selected from those obtainable by the polycondensation reaction of a carbonic acid derivative, typically diphenyl carbonate Ph-O-C(=O)-O-Ph, wherein Ph is phenyl, or phosgene Cl-C(=O)-Cl, and at least one optionally substituted aromatic diol (D) HO-R-OH in which R is a C6-C50 divalent radical comprising at least one arylene group.

The optionally substituted arylene group of the aromatic diol (D) is preferably selected from optionally substituted phenylenes and optionally substituted naphthylenes.

The aromatic diol (D) is preferably selected from aromatic diols complying with formulae (D-A) and (D-B) here below:

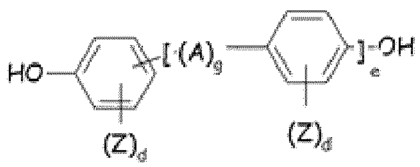

(D-A)

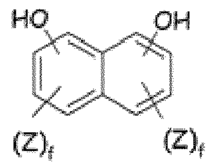

(D-B)

where

- A is selected from C1-C8 alkylenes, C2-C8 alkylidenes, C5-C15 cycloalkylenes, C5-C15 cycloalkylidenes, carbonyl atom, oxygen atom, sulfur atom, SO, $SO_2$- and radicals complying with formula (D'-A) here below :

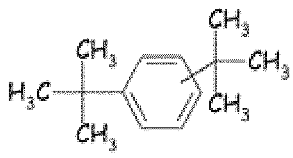

(D'-A)

- Z is selected from F, Cl, Br, I, C1-C4 alkyls; if several Z radicals are substituents, they may be identical or different from one another;
- e denotes an integer from 0 to 1;
- g denotes an integer from 0 to 1;
- d denotes an integer from 0 to 4; and
- f denotes an integer from 0 to 3.

Preferably, aromatic diols (D) are selected in the group consisting of 2,2 bis-(4-hydroxyphenyl)-propane (bisphenol A), 2,2 bis (3,5 dimethyl 4 hydroxyphenyl) propane, 2,2,4-trimethyl cyclohexyl 1,1-diphenol and 1,1-bis-(4-hydroxy-phenyl)-cyclohexane.

Among the aromatic polycarbonates suitable in the practice of the invention as aromatic polycarbonates (PC) are included phenolphthalein-based polycarbonates, copolycarbonates and terpolycarbonates.

Preferably more than 75 wt. %, more preferably more than 90 wt. % and more preferably 100 wt. % of the recurring units of the aromatic polycarbonate are recurring units ($R_{PC}$).

According to a particularly preferred embodiment, essentially all, if not all, the recurring units of the aromatic polycarbonate are recurring units ($R_{PC}$) obtained by the polycondensation reaction of a carbonic acid derivative with bisphenol A.

***Polyamides (PA)***

As used herein, a polyamide has at least about 50 mol. % recurring units ($R_{PA}$) including at least one amide group (-C(=O)N(H)-). In some embodiments, the polyamide can have at least about 60 mol. %, at least about 70 mol. %, at least about 80 mol. %, at least about 90 mol. %, at least about 95 mol. %, at least about 99 mol. %, or at least about 99.9 mol. % of recurring units ($R_{PA}$).

According to a first embodiment, the recurring unit ($R_{PA}$) can be represented by formula (E)

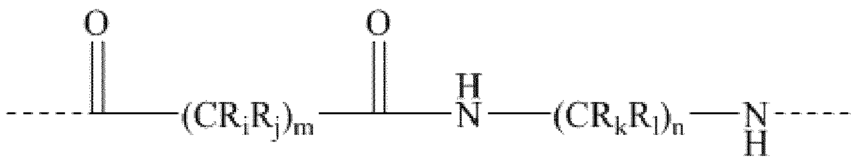

(E),

where

- each $R_i$, $R_j$, $R_k$, and $R_1$ on each carbon atom is independently selected from a hydrogen, a halogen, an alky, an alkenyl, an ether, a thioether, an ester, an amide, an imide, an alkali or alkaline earth metal sulfonate, an alkyl sulfonate, an alkali or alkaline earth metal phosphonate, an alkyl phosphonate, an amine, an quaternary ammonium, and any combination thereof;
- m is an integer from 4 to 10;
- n is an integer from 6 to 12.

According to a second embodiment, recurring units ($R_{PA}$) are obtained from lactam or aminoacids having the structure $NH_2$-(CH2)$_n$-COOH with n=3 to 12, preferentially covering n=5, n=10, n=11 (PA6, PA11, PA12).

According to a third embodiment, recurring units ($R_{PA}$) are obtained by the polycondensation reaction between at least one aliphatic diacid or derivative thereof (acid halogenides, especially chlorides, acid anhydrides, acid salts, acid amides) and at least one aromatic diamine.

Non limitative examples of aromatic diamines are notably *m*-phenylene diamine (MPD), *p*-phenylene diamine (PPD), 3,4'-diaminodiphenyl ether (3,4'-ODA), 4,4'-diaminodiphenyl ether (4,4'-ODA), metaxylylenediamine (MXDA) :

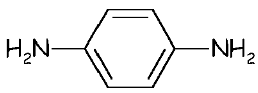

(PPD)

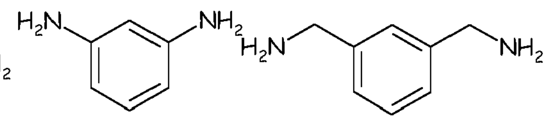

(MPD) (MXDA)

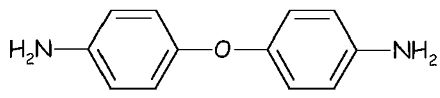

(4,4'-ODA)

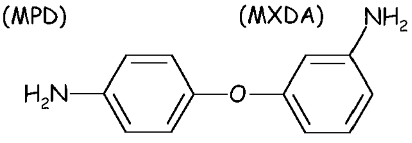

(3,4'-ODA)

The aromatic diamine is preferably metaxylylenediamine (MXDA).

Non limitative examples of aliphatic diacids are notably oxalic acid (HOOC-COOH), malonic acid (HOOC-$CH_2$-COOH), succinic acid [HOOC-$(CH_2)_2$-COOH], glutaric acid [HOOC-$(CH_2)_3$-COOH], 2,2-dimethyl-glutaric acid [HOOC-$C(CH_3)_2$-$(CH_2)_2$-COOH], adipic acid [HOOC-$(CH_2)_4$-COOH], 2,4,4-trimethyl-adipic acid [HOOC-$CH(CH_3)$-$CH_2$-$C(CH_3)_2$-$CH_2$-COOH], pimelic acid [HOOC-$(CH_2)_5$-COOH], suberic acid [HOOC-$(CH_2)_6$-COOH], azelaic acid [HOOC-$(CH_2)_7$-COOH], sebacic acid [HOOC-$(CH_2)_8$-COOH], undecanedioic acid [HOOC-$(CH_2)_9$-COOH], dodecandioic acid [HOOC-$(CH_2)_{10}$-COOH], tetradecandioic acid [HOOC-$(CH_2)_{11}$-COOH].

The aliphatic diacid is preferably adipic acid.

As above mentioned, such aliphatic diacids can be used in the polycondensation reaction notably under the form of free acid and acid chloride.

Preferred polymers are PMXDA polymers consisting essentially of recurring units derived from the polycondensation reaction between adipic acid or derivative thereof and metaxylylenediamine.

PMXDA polymers suitable for the purposes of the invention are notably available as IXEF® PMXDAs from Solvay Specialty Polymers USA, LLC.

According to a fourth embodiment, recurring units ($R_{PA}$) are obtained by the polycondensation reaction between

at least one aromatic diacid or derivative thereof and at least one aliphatic diamine.

Non limitative examples of aliphatic diamines are notably 1,2-diaminoethane, 1,2-diaminopropane, propylene-1,3-diamine, 1,3-diaminobutane, 1,4-diaminobutane (putrescine), 1,5-diaminopentane (cadaverine), 1,6-hexanediamine or hexamethylenediamine (HMDA), 1,8-diaminooctane, 1,10-diaminodecane, 1,12-diaminododecane, 1-amino-3-*N*-methyl-*N*-(3-aminopropyl)-aminopropane).

Preferred aliphatic diamine is hexamethylenediamine (HMDA).

Aromatic diacids and derivative thereof employed in the polycondensation reaction to yield such polymer are not particularly restricted. Non limitative examples of aromatic diacids are notably phthalic acids, including isophthalic acid (IPA), terephthalic acid (TPA) and (ortho)phthalic acid (PA), naphalendicarboxylic acids, 2,5-pyridinedicarboxylic acid, 2,4-pyridinedicarboxylic acid, 3,5-pyridinedicarboxylic acid, 2,2-bis(4-carboxyphenyl)propane, bis(4-carboxyphenyl)methane, 2,2-bis(4-carboxyphenyl)hexafluoropropane, 2,2-bis(4-carboxyphenyl)ketone, 4,4'-bis(4-carboxyphenyl)sulfone, 2,2-bis(3-carboxyphenyl)propane, bis(3-carboxyphenyl)methane, 2,2-bis(3-carboxyphenyl)hexafluoropropane, 2,2-bis(3-carboxyphenyl)ketone, bis(3-carboxyphenoxy)benzene.

Preferably, the polymer according to this fourth embodiment is a polyphthalamide, i.e. an aromatic polyamide comprising recurring units, more than 50 mole % of the recurring units being obtained by the polycondensation reaction between at least one phthalic acid, chosen among IPA, TPA and PA, or derivative thereof, and at least one aliphatic diamine.

For the avoidance of doubt, chemical structures of IPA, TPA, PA are depicted herein below:

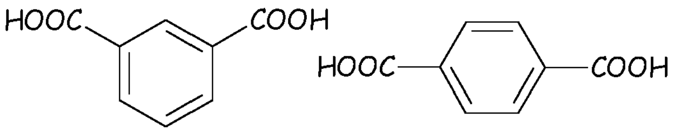

(IPA) (TPA)

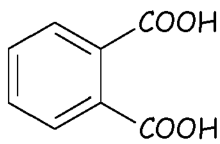

(PA)

Suitable polyphthalamides are notably available as AMODEL® polyphthalamides from Solvay Specialty Polymers USA, LLC.

***Polyamideimide (PAI)***

As used herein, a polyamideimide or aromatic polyamide-imide polymer (PAI) has at least 50 mol. % of recurring units ($R_{PAI}$) comprising at least one aromatic ring, at least one imide group, as such and/or in its amic acid form, and at least one amide group which is not included in the amic acid form of an imide group.

The recurring units ($R_{PAI}$) are advantageously chosen among those of formula:

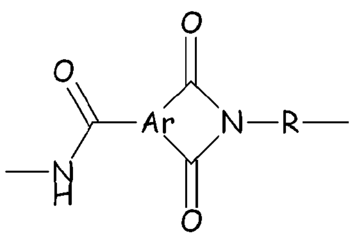

$R_{PAI}$-a
(imide form)

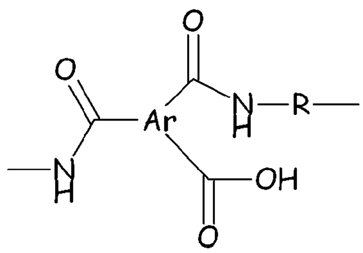

$R_{PAI}$-b
(amic acid form)

wherein :

- Ar is a trivalent aromatic group; typically Ar is selected from the group consisting of following structures :

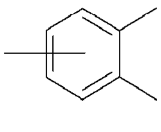 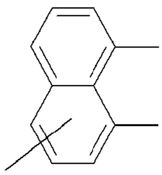 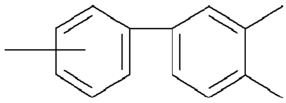 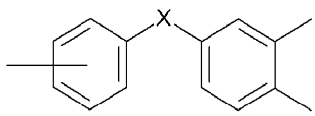

and corresponding optionally substituted structures, with X being -O-, -C(O)-, $-CH_2-$, $-C(CH_3)_2-$, $-C(CF_3)_2-$, $-(CF_2)_q-$, with q being an integer from 1 to 5 ;

R is a divalent aromatic group; typically R is selected from the group consisting of following structures :

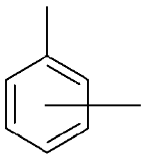 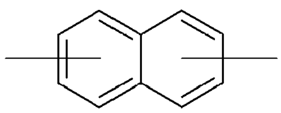 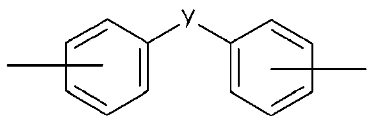

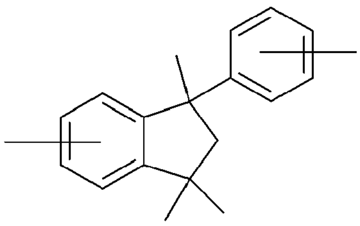 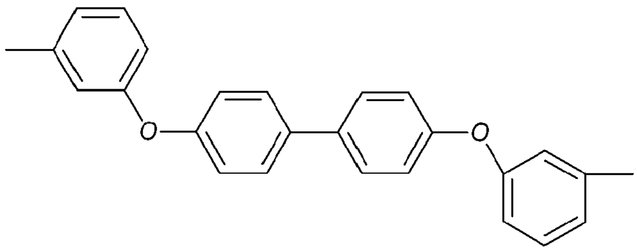

and corresponding optionally substituted structures, with Y being -O-, -S-, $-SO_2-$, $-CH_2-$, -C(O)-, $-C(CH_3)_2-$, $-C(CF_3)_2-$, $-(CF_2)_q$, q being an integer from 1 to 5.

Preferably, the aromatic polyamide-imide comprises more than 50 % of recurring units ($R_{PAI}$) comprising an imide group in which the imide group is present as such, like in recurring units ($R_{PAI}$-a), and/or in its amic acid form, like in recurring units ($R_{PAI}$-b).

Recurring units ($R_{PAI}$) are preferably chosen from recurring units (1), (m) and (n), in their amide-imide (a) or amide-amic acid (b) forms :

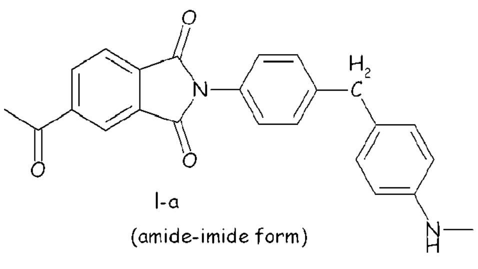

I-a

(amide-imide form)

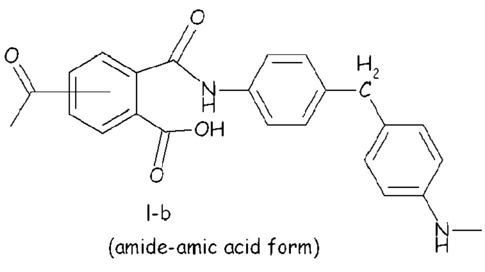

I-b

(amide-amic acid form)

(I)

wherein the attachment of the two amide groups to the aromatic ring as shown in (1-b) will be understood to represent the 1,3 and the 1,4 polyamide-amic acid configurations ;

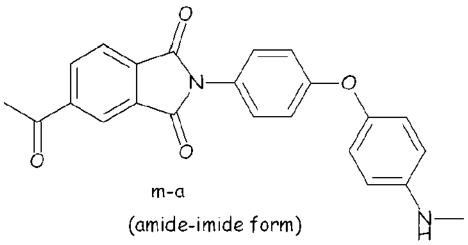

m-a

(amide-imide form)

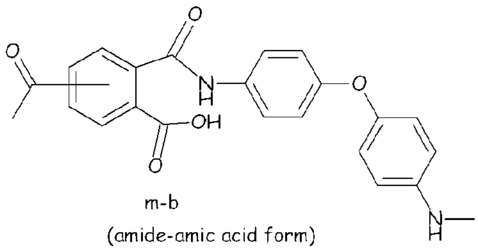

m-b

(amide-amic acid form)

(m)

wherein the attachment of the two amide groups to the aromatic ring as shown in (m-b) will be understood to represent the 1,3 and the 1,4 polyamide-amic acid configurations ; and

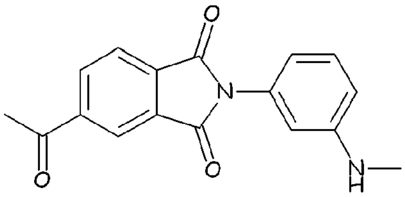

n-a

(amide-imide form)

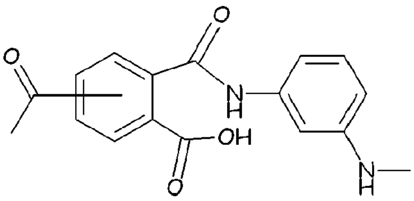

n-b

(amide-amic acid form)

(n)

wherein the attachment of the two amide groups to the aromatic ring as shown in (n-b) will be understood to represent the 1,3 and the 1,4 polyamide-amic acid configurations.

More preferably, the polymer (PAI) comprises more than 90 mol. % of recurring units ($R_{PAI}$). Still more preferably, it contains no recurring unit other than recurring units ($R_{PAI}$). Polymers commercialized by Solvay Specialty Polymers USA, L.L.C. as TORLON® polyamide-imides comply with this criterion.

Torlon® 4000T is an aromatic polyamide-imide polymer commercially available from Solvay Specialty Polymers USA, LLC.

***Polyphenylenes (PP)***

As used herein, a polyphenylene polymer denotes any polymer comprising more than 50 mol. % of recurrig units (Rp) of formula (F) :

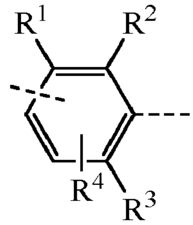

(F)

where

- $R^1$, $R^2$, $R^3$, and $R^4$ are each independently selected from the group consisting of a hydrogen, an alkyl, an aryl, an alkoxy, an aryloxy, an alkylketone, an arylketone, a fluoroalkyl, a fluoroaryl, a bromoalkyl, a bromoaryl, a chloroalkyl, a chloroaryl, an alkylsulfone, an arylsulfone, an alkylamide, an arylamide, an alkylester, an arylester, a fluorine, a chlorine, and a bromine.

In some embodiments, a polyphenylene polymer can have at least about 60 mol. %, at least about 70 mol. %, at least about 80 mol. %, at least about 90 mol. %, at least about 95 mol. %, at least about 99 mol. % or at least about 99.9 mol. % repeat units (Rp).

In some embodiments, one or more of $R^1$, $R^2$, $R^3$, and $R^4$ can be independently represented by formula (F') :

Ar - T - (F')

wherein :

- Ar is represented by a formula selected from the following group of formulae :

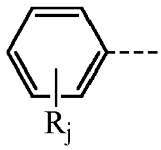
,
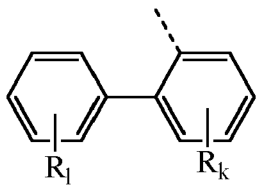
,
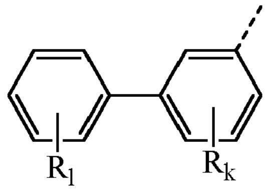

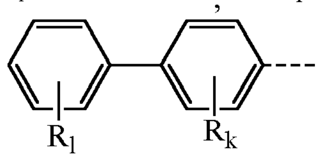
,

and

- with each $R_j$, $R_k$ and $R_l$ is independently selected from the group consisting of hydrogen, halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium and with j and 1, equal or different from each other are independently 0, 1, 2, 3, 4, or 5 and, k, equal or different from j or 1, is independently 0, 1, 2, 3 or 4;
- where the dashed lined indicates a bond to T.
- where T is selected from the group consisting of $-CH_2-$; -O-; $-SO_2-$; -S-; -C(O)-; $-C(CH_3)_2-$; $-C(CF_3)_2-$; $-C(=CCl_2)-$; $-C(CH_3)(CH_2CH_2COOH)-$; -N=N-; $-R_aC=CR_b-$, where each $R_a$ and $R_b$, independently of one another, is a hydrogen or a C1-C12-alkyl, C1-C12-alkoxy, or C6-C18-aryl group; $-(CH_2)_n-$ and - $(CF_2)_n-$ with n being an integer from 1 to 6; an aliphatic divalent group, linear or branched, of up to 6 carbon atoms; and combinations thereof.

In some embodiments, one or more of $R^1$, $R^2$, $R^3$, and $R^4$ can be represented by formula (F") :

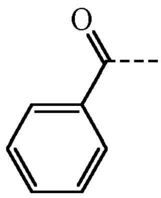
(F'')

where, in formula (F"), the dashed bond indicates the bond to the benzyl moiety of repeat unit (Rp).

Polyphenylene copolymers are commercially available from Solvay Advanced Polymers, L.L.C. as PRIMOSPIRE® PR-120 polyphenylene and PRIMOSPIRE® SRP PR-250 polyphenylene.

***Fluoropolymer (FP)***

As used herein, a fluoropolymer denotes a polymer comprising recurring units derived from at least one fluorinated monomer, that-is-to-say an ethylenically unsaturated monomer comprising at least one fluorine atom. The fluoropolymer may further comprise at least one hydrogenated monomer, that-is-to-say an ethylenically unsaturated monomer comprising at least one hydrogen atom and free from fluorine atoms. The fluoropolymer may be semi-crystalline or amorphous.

The fluoropolymer (FP) is typically selected from the group consisting of:

(1) polymers (PF-1) comprising recurring units derived from at least one fluorinated monomer selected from tetrafluoroethylene (TFE) and chlorotrifluoroethylene (CTFE), and from at least one hydrogenated monomer selected from ethylene, propylene and isobutylene, optionally containing one or more additional comonomers, typically in amounts of from 0.01 % to 30 % by moles, based on the total amount of TFE and/or CTFE and the hydrogenated monomer(s);

(2) polymers (PF-2) comprising recurring units derived from vinylidene fluoride (VDF), and, optionally, from one or more fluorinated monomers different from VDF;

(3) polymers (PF-3) comprising recurring units derived from tetrafluoroethylene (TFE) and at least one fluorinated monomer different from TFE selected from the group consisting of:

- perfluoroalkylvinylethers of formula $CF_2$=$CFOR_{f1}$, wherein $R_{f1}$, is a $C_1$-$C_6$ perfluoroalkyl group;
- perfluoro-oxyalkylvinylethers of formula $CF_2$=$CFOX_0$ wherein $X_0$ is a $C_1$-$C_{12}$ perfluorooxyalkyl group comprising one or more ether groups, such as perfluoro-2-propoxy-propyl group;
- $C_3$-$C_8$ perfluoroolefins, such as hexafluoropropene (HFP); and
- perfluorodioxoles of formula :

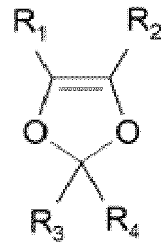

wherein $R_1$, $R_2$, $R_3$ and $R_4$, equal to or different from each other, are independently selected from the group consisting of -F, a $C_1$-$C_6$ fluoroalkyl group, optionally comprising one or more oxygen atoms, and a $C_1$-$C_6$ fluoroalkoxy group, optionally comprising one or more oxygen atoms; and

(4) polymers (PF-4) comprising recurring units derived from at least one cyclopolymerizable monomer of formula :

$$CR_7R_8=CR_9OCR_{10}R_{11}(CR_{12}R_{13})_a(O)_bCR_{14}=CR_{15}R_{16},$$

wherein each $R_7$ to $R_{16}$, independently of one another, is selected from -F and a $C_1$-$C_3$ fluoroalkyl group, a is 0 or 1, b is 0 or 1 with the proviso that b is 0 when a is 1.

Preferably, the fluoropolymer is polyvinylidene difluoride (PVDF), polytetrafluoroethylene (PTFE) or perfluoroalkoxy alkanes (PFA).

Fluoropolymers are commercially available from Solvay Specialty Polymers Italy S.p.A under the trademark name HYFLON® PFA P and M series, HYFLON® MFA and HYFLON® AD.

***Additive***

The polymer composition (C) of the present invention also comprises an additive of formula (I) :

$$R_a\text{-Ar-}X_b \qquad (I)$$

where

- Ar is an aromatic moiety and is selected from the group consisting of substituted or unsubstituted, aromatic monocyclic or polycyclic group having 5 to 18 carbon atoms,
- each of R, identical or different from each other, is selected from the group consisting of a halogen, an hydroxyl, a C1-C18 aliphatic group, a C1-C18 cycloaliphatic group and a C1-C18 aromatic;
- a is zero or an integer ranging from 1 to 5, preferably a is zero or 1;
- X is $(SO_3^-)$, $(M^{p+})_{1/p}$ or $(COO^-)$, $(M^{p+})_{1/p}$ in which $M^{p+}$ is a metal cation of p valence;
- b is an integer ranging from 1 to 4, preferably b is 1 or 2.

One of the essential features of the present invention is to use an additive in the form of a salt of sulfonic acid or carboxylic acid, more precisely a sulfonate $-SO_3^-$ and/or a carboxylate $-COO^-$. The additive may comprise 1 to 4 groups X, identical or different, where X is $(SO_3^-)$, $(M^{p+})_{1/p}$ or $(COO^-)$, $(M^{p+})_{1/p}$ in which $M^{p+}$ is a metal cation of p valence.

According to an embodiment, the additive of formula (I) is such that each of R, identical or different from each other, is selected from the group consisting of a halogen, an hydroxyl and a C1-C3 aliphatic group (i.e. a methyl, an ethyl or a propyl).

According to an embodiment, M is selected from the group consisting of sodium, potassium, calcium, lithium, magnesium, silver, aluminium, zinc, nickel, copper, palladium, iron, and cesium. Preferably M is sodium or potassium.

M can alternatively be specifically chosen among alkali metals (IA of the periodic table) or alkaline earths metal (IIA of the periodic table).

According to an embodiment, X is a sodium and/or a potassium salt of sulfonic acid and/or carboxylic acid.

The additive used in the present invention is by nature water-soluble.

The additive may also be said to be extractable, as defined below.

According to one embodiment of the invention, the aromatic moiety of formula (I) can be selected from the group consisting of :

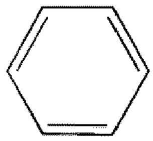
(Ar-A)

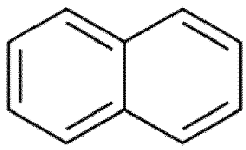
(Ar-B)

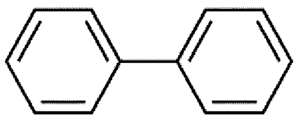
(Ar-C)

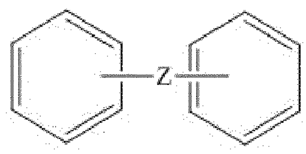
(Ar-D)

wherein Z is a divalent moiety and is selected from the group consisting of $-SO_2-$, -CO- and alkylenes of 1 to 6 carbon atoms. Z can in particular be a $-C(CH_3)_2-$ or $-C_nH_{2n}-$ with n being an integer from 1 to 6, for example $-CH_2-$ or $-CH_2-CH_2-$.

According to one embodiment of the invention, the additive of formula (I) is such that each aromatic moiety of formula (I), for example (Ar-A) to (Ar-D) comprises 1,2 or 3 groups X, identical or different, where X is $(SO_3^-)$, $(M^{p+})_{1/p}$ or $(COO^-)$, $(M^{p+})_{1/p}$ in which $M^{p+}$ is a metal cation of p valence.

According to one embodiment of the invention, the additive of formula (I) is such that each aromatic moiety of formula (I) comprises 1 or 2 groups X, identical or different, where X is $(SO_3^-)$, $(M^{p+})_{1/p}$ or $(COO^-)$, $(M^{p+})_{1/p}$ in which $M^{p+}$ is a metal cation of p valence.

According to one embodiment, the additive is according to formula (II) :

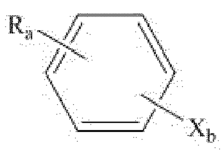
(II)

wherein :

- each of R, identical or different from each other, is selected from the group consisting of a halogen, an hydroxyl, a C1-C18 aliphatic group, a C1-C18 cycloaliphatic group and a C1-C18 aromatic;
- a is zero or an integer ranging from 1 to 5;
- X is $(SO_3^-)$, $(M^{p+})_{1/p}$ or $(COO^-)$, $(M^{p+})_{1/p}$ in which $M^{p+}$ is a metal cation of p valence;

- b is each of either 1 or 2.

According to one further embodiment of the invention, the additive of formula (I) or (II) is such that a is 0, 1 or 2.

According to another embodiment, a is zero so that the phenylene moieties have no other substituents than the sulfonate or carboxylate functions.

According to another embodiment of the invention, the additive salt is benzoate, methylbenzoate, ethylbenzoate, propylbenzoate, benzene sulfonate, benzene disulfonate, p-toluene sulfonate, xylene sulfonate, cumene sulfonate, p-cymene sulfonate and dodecylbenzene sulfonate.

According to another embodiment of the invention, the additive is selected from the group consisting of sodium or potassium benzoate, sodium or potassium methyl benzoate, sodium or potassium ethylbenzoate, sodium or potassium butylbenzoate, sodium or potassium benzene sulfonate, sodium or potassium benzene-1,3-disulfonate, sodium or potassium p-toluene sulfonate, sodium or potassium xylenesulfonate, sodium or potassium cumene sulfonate, sodium or potassium *para*-cymene sulfonate, sodium or potassium n-butyl benzene sulfonate, sodium or potassium iso-butyl benzene sulfonate, sodium or potassium tert-butyl benezene sulfonate and sodium or potassium dodecylbenzenesulfonate.

The additive is present in the composition of the invention in a quantity of at least 28 wt. %, based on the total weight of the composition.

According to another embodiment of the invention, the composition comprises between about 28 and about 80 wt. % of the additive, for example between about 30 and about 75 wt. % or between about 35 and about 70 wt. %.

According to an embodiment of the present invention, the additive has a melting temperature Tma (°C) of at least 150°C, for example of at least 170°C, at least 180°C, at least 190°C, or at least 200 °C, as for example measured by differential scanning calorimetry (DSC) according to ASTM D3418.

According to another embodiment of the invention, the composition is such that the polymer (P) is semi-cristalline and the additive has a melting temperature Tma (°C) such that

$$\mathrm{Tmp} - 50 \leq \mathrm{Tma} \leq \mathrm{Tmp} + 50 \qquad \text{(a)}$$

wherein Tmp (°C) is the melting point of the semi-crystalline polymer, as for example measured by differential scanning calorimetry (DSC) according to ASTM D3418.

According to this embodiment, the components of the composition are chosen according to their respective melting temperatures (°C) so as to fulfil equation (a). Preferably, the components of the composition are chosen so as to fulfil any of the below equations (b) to (e) :

$$\mathrm{Tmp} - 45 \leq \mathrm{Tma} \leq \mathrm{Tmp} + 45 \qquad \text{(b),}$$

$$\mathrm{Tmp} - 40 \leq \mathrm{Tma} \leq \mathrm{Tmp} + 40 \qquad \text{(c)}$$

$$\mathrm{Tmp} - 35 \leq \mathrm{Tma} \leq \mathrm{Tmp} + 35 \qquad \text{(d)}$$

$$\mathrm{Tmp} - 30 \leq \mathrm{Tma} \leq \mathrm{Tmp} + 30 \qquad \text{(e)}$$

Melting temperature of the components can notably be measured using differential scanning calorimetry according to ASTM D3418.

According to an embodiment of the invention, the polymer composition (C) comprises:

- at least one semi-crystalline polymer (P) selected in the group consisting of PAEK and PPS, and
- at least 28 wt. %, by weight of the polymer composition (C), of at least one additive as described above, for example selected in the group consisting of sodium or potassium benzoate, sodium or potassium methyl benzoate, sodium or potassium ethylbenzoate, sodium or potassium butylbenzoate, sodium or potassium benzene sulfonate, sodium or potassium benzene-1,3-disulfonate, sodium or potassium p-toluene sulfonate, sodium or potassium xylenesulfonate, sodium or potassium cumene sulfonate, sodium or potassium p-cymene sulfonate, sodium or potassium n-butyl benzene sulfonate, sodium or potassium iso-butyl benzene sulfonate, sodium or potassium tert-butyl benezene sulfonate and sodium or potassium dodecylbenzenesulfonate, preferably sodium or potassium benzene sulfonate.

*Optional Components*

In some embodiments, the polymer composition (C) includes titanium dioxide ($TiO_2$). The amount of titanium dioxide preferably ranges from 0 pph to about 25 pph, for example from about 0.1 pph to about 25 pph, for example from about 5 pph to about 20 pph. The amount of titanium dioxide ($TiO_2$) may be at most about 25 pph, preferably at most about 20 pph, preferably at most about 20 pph, preferably at most about 15 pph.

The polymer composition (C) may further optionally comprise additional components such as ultraviolet light stabilizers, heat stabilizers, antioxidants, pigments, processing aids, lubricants, flame retardants, plasticizers and/or conductivity additive such as carbon black and carbon nanofibrils.

The polymer composition (C) may further comprise water-soluble or dispersible polymer additives for benefit of processing and/or optimizing pore morphology and/or porosity. Examples of such polymers include : sulfo-polyesters, polyvinyl alcohol, polyethylene oxide, polyethylene oxide/propylene oxide copolymers, polyethylene imine, polyethyloxazoline, and polyvinylpyrrolidone, Such polymer additive are chosen to remain stable at the desired processing temperature and remain substantially extractable from the final articles by water.

The polymer composition (C) may further comprise flame retardants such as halogen and halogen free flame retardants.

***Articles (A) Comprising the Polymer Composition (C) and Applications***

The polymer compositions (C) described herein can be used for the manufacture of a wide variety of formed articles. The term "article" in the present context is thus to be understood broadly. It refers to any type of article of manufacture which can be formed from a polymeric material and covers (a) the intermediate articles (or intermediate shaped articles), which are non-porous, and result directly from the step consisting in shaping the polymer composition of the invention into shaped articles, for example by injection molding, extrusion molding or 3D printing, and (b) the final articles (or final shaped articles), which are porous, and obtained from the intermediate articles which have, for example been immersed into water to dissolve the additive and create the pores. In this context, the additive is said to be water-soluble and/or extractable.

The polymer composition (C) may be used for thermal insulation or acoustic insulation, in variable shapes and sizes.

The polymer article (A) comprising the polymer composition (C) of the present invention may be used as a filter or as a membrane (e.g. microfiltration or ultrafiltration).

The article is preferably a membrane. Indeed, the polymer compositions described herein are very well suited for the production of membranes of this type. The term "membrane" is used herein in its usual meaning, that is to say it refers to a discrete, generally thin, interface that moderates the permeation of chemical species in contact with it. This interface may be molecularly homogeneous, that is, completely uniform in structure (dense membrane), or it may be chemically or physically heterogeneous, for example containing voids, holes or pores of finite dimensions (porous membrane). Membranes can be in the form of a flat sheet or in the form of tubes. Tubular membranes are classified based on their dimensions in tubular membranes having a diameter greater than 3 mm; capillary membranes, having a diameter comprised between 0.5 mm and 3 mm; and hollow fine fibers having a diameter of less than 0.5 mm. Flat sheet membranes are generally preferred when high fluxes are required whereas hollow fibers are particularly advantageous in applications where compact modules with high surface areas are required.

Porous membranes can be characterized by permeability measurements (volume of water which permeates through the membrane under given pressure conditions), porosity (ratio between the volume of voids and the total volume occupied by the membrane), pores features (average pore diameter, smallest pore diameter and largest pore diameter). They can also be characterized by their mechanical properties (tensile properties notably) and chemical resistance (after immersion in various solvents during a given amount of time).

The articles may be used singularly or in bundle arrays and form, for example, filter systems. The articles may be, for example, microfiltration membranes, ultrafiltration membranes or support for reverse osmosis.

These articles can be used in the separation of various materials. The potential utility of such a membrane article depends upon the membrane material, its structure (which depends upon its method of preparation), and the mode in which it is operated. For example, such articles can be used to permeate gases, e.g. oxygen or nitrogen, to separate solutes of suspended matter from solutions, e.g. soluble waste materials from blood (hemodialysis) or to separate dissolved molecules, colloids, and suspended solids from smaller molecules, e.g., in the manufacture of latex or cheese (ultrafiltration).

The inventors have shown that the porous membranes of the present invention present an improved porous structure.

Accordingly, the present invention also concerns the method of using the final shaped articles, for example porous membrane in filtration and purification processes, such as filtration of waste water, preparation of ultrapure water

and in medical, pharmaceutical or food applications, including removal of microorganisms, dialyses and protein filtration.

In other words, the present invention concerns the use of the shaped articles for filtering or purifying liquids, such as filtering waste water, for preparing ultrapure water and in medical, pharmaceutical or food applications, including removal of microorganisms, dialyses and protein filtration.

The porosity of the membrane may range from 3 to 90 %, preferably from 5 to 80 % or from 20 to 70 %. For example, the membrane has a porosity of about 50 %, or about 60 %.

The pores may have an average diameter of at least 0.001 μm, of at least 0.005 μm, of at least 0.01 μm, of at least 0.1 μm, of at least 1 μm, of at least 10 μm and of at most 50 μm.

According to an embodiment, the porous polymer article, for example membrane, is used for filtering or purifying fluids, such as liquids or gas.

According to another embodiment, the porous polymer article, for example membrane, is used as a separator in batteries, such as Li-ion batteries.

According to another embodiment, the porous polymer article, for example membrane, is used for as a diaphragm for electrolizer for the production of dihydrogen.

According to another embodiment, the porous polymer article, for example porous membrane according to the present invention, can be used for filtrating biologic solution (e.g. bioburden, virus, other large molecules) and/or buffer solutions (e.g. solutions that may contain small amount of solvents like DMSO or other polar aprotic solvents).

According to another embodiment of the present invention, the polymer composition (C) is used as a support material in processes for manufacturing a three-dimensional object with an extrusion-based additive manufacturing system, otherwise known also as fused filament fabrication technique. The polymer composition (C) used as support material in these 3D manufacturing methods is provided under the form of a filament. The filament may have a cylindrical or substantially cylindrical geometry, or may have a non-cylindrical geometry, such as a ribbon filament geometry; further, filament may have a hollow geometry, or may have a core-shell geometry, with the support material of the present invention being used to form either the core or the shell.

***Method of Manufacturing the Polymer Compositions (C), Articles (A) and Porous articles***

The present invention also relates to the method of making the polymer composition (C) as described above, the method comprising melt-mixing the semi-crystalline or amorphous polymer (P) and the additive.

More precisely, the polymer composition (C) can be manufactured by melt-mixing the at least one semi-crystalline or amorphous polymer (P), with at least 28 wt. %, by weight of the polymer composition, of the at least one additive of formula (I):

$$R_a\text{-}Ar\text{-}X_b \qquad (I)$$

where

- Ar is an aromatic moiety and is selected from the group consisting of substituted or unsubstituted, aromatic monocyclic or polycyclic group having 5 to 18 carbon atoms,
- each of R, identical or different from each other, is selected from the group consisting of a halogen, an hydroxyl, a C1-C18 aliphatic group, a C1-C18 cycloaliphatic group and a C1-C18 aromatic;
- a is zero or an integer ranging from 1 to 5;
- X is $(SO_3^-)$, $(M^{p+})_{1/p}$ or $(COO^-)$, $(M^{p+})_{1/p}$ in which $M^{p+}$ is a metal cation of p valence;
- b is an integer ranging from 1 to 4.

to provide a molten mixture.

The polymer compositions (C) described herein are advantageously provided in the form of pellets, which may be used in injection molding or extrusion processes known in the art.

The polymer composition (C) can be made by methods well known to the person of ordinary skill in the art. For example, such methods include, but are not limited to, melt-mixing processes. Melt-mixing processes are typically carried out by heating the thermoplastic polymer above the melting temperature of the thermoplastic polymer thereby forming a melt of the thermoplastic polymer. Such a process may be carried out by heating the polymers above the melting temperature (Tm) of the semi-crystalline polymer to form a melt of the polymers and/or above the glass transition temperature (Tg) of the amorphous polymer. In some embodiments, the processing temperature ranges from about 180-450°C, preferably from about 220-440°C, from about 260-430°C or from about 280-420°C. Preferably, the processing temperature is at least 15°C, preferably at least 30°C, at least 50°C, at least 80°C or at least 100°C greater than the melting temperature (Tg) of the semi-crystalline polymer (or of the highest polymer Tm in the polymer composition if the composition comprises several semi-crystalline polymers). Preferably, the processing temperature is at least 15°C,

preferably at least 30°C or at least 50°C greater than the glass transition temperature (Tg) of the amorphous polymer (or of the highest polymer Tg in the polymer composition if the composition comprises several amorphous polymers). In case of a blend of an amorphous polymer and a semi-crystalline polymer, the melt-mixing process is carried out a temperature which the highest of the Tm or the Tg temperatures.

The additive used in the context of the present invention is preferably in the form of a powder.

The process for the preparation of the composition can be carried out in a melt-mixing apparatus, for which any melt-mixing apparatus known to the one skilled in the art of preparing polymer compositions by melt mixing can be used. Suitable melt-mixing apparatus are, for example, kneaders, Banbury mixers, single-screw extruders, and twin-screw extruders. Preferably, use is made of an extruder fitted with means for dosing all the desired components to the extruder, either to the extruder's throat or to the melt. In the process for the preparation of the polymer composition the constituting components for forming the composition are fed to the melt-mixing apparatus and melt-mixed in that apparatus. The constituting components may be fed simultaneously as a powder mixture or granule mixer, also known as dry-blend, or may be fed separately.

The order of combining the components during melt-mixing is not particularly limited. In one embodiment, the components can be mixed in a single batch, such that the desired amounts of each component are added together and subsequently mixed. In other embodiments, a first sub-set of components can be initially mixed together and one or more of the remaining components can be added to the mixture for further mixing. For clarity, the total desired amount of each component does not have to be mixed as a single quantity. For example, for one or more of the components, a partial quantity can be initially added and mixed and, subsequently, some or all of the remainder can be added and mixed.

The method of manufacturing the polymer composition (C) may comprise if needed several successive steps of melt-mixing or extrusion under different conditions.

The process itself, or each step of the process if relevant, may also comprise a step consisting in a cooling of the molten mixture.

The intermediate non-porous article (e.g. the shaped non-porous membrane or the shaped porous film) and the final porous article (e.g. the porous membrane or the porous film) according to the present invention are made from the polymer composition (C) using any suitable melt-processing method. In particular, they are made by injection molding, extrusion molding or 3D printing.

For this purpose, any standard molding technique can be used; standard techniques including shaping the polymer compositions in a molten/softened form can be advantageously applied, and include notably compression molding, extrusion molding, injection molding, transfer molding and the like. Dies may be used to shape the articles, for example a die having an annular orifice if the article is a hollow fiber membrane.

According to an embodiment of the present invention, the method of forming the polymer articles (intermediate non porous ones or final porous ones) comprises a step consisting in printing layers of a three-dimensional object from the provided polymer composition (C). According to this embodiment, the polymer article is in fact formed with an extrusion-based additive manufacturing system, otherwise known also as fused filament fabrication technique.

According to an embodiment of the present invention, the method of forming the polymer articles (intermediate non porous ones or final porous ones) comprises at least the step consisting in extruding the polymer composition (C) above described.

According to an embodiment of the present invention, the method of forming the porous polymer articles (e.g. porous membrane or porous hollow fiber) comprises additionally the step consisting in contacting the intermediate non porous article with water, for example by immersion into water or in a solution containing water. The water used to dissolve the water-soluble additive can be at a temperature varying for example between room temperature and 95°C. The time period needed to dissolve the polymer is variable. As an example, the time period can vary between 1 second and 2 hours, or from 5 seconds to 1 hour.

According to this embodiment, the additive can be said to be extractable, that-is-to-say able to be substantially extracted from the intermediate product by contact with water, for example immersion into water, the water being possibly heated up to 95°C, for a period of time up to 2 hours. "Substantially" in this context means that at least 80 wt. % of the additive is extracted from the intermediate product, for example at least 85 wt. %, at least 90 wt. % or at least 95 wt. %, so as to obtained the final shaped porous article.

Accordingly the present invention also concerns a method of forming a porous polymer membrane M), comprising:

(i) preparing a polymer composition (C) as described above,
(ii) processing the polymer composition (C) into a membrane, for example extruding the polymer composition (C) into a flat membrane,
(iii) immersing the membrane into water.

The method of forming a porous polymer membrane (M) can comprise one or several optional steps. One

optional step consists in stretching the membrane. This optional step can notably take place during step (iii). Another optional step consists in drying the membrane, for example in an oven.

The present invention is also directed to the porous polymer article (e.g. membrane or hollow tube) obtainable by this method.

The porous polymer article may contain up to 20 wt. % of the additive, for example up to 15 wt. % of the additive, up to 10 wt. % of the additive, up to 5 wt. % of the additive or less. According to an embodiment, it contains less than 1 wt. % of the additive.

The articles according to the present invention may be coated or further treated.

Hence, the method, as above detailed, may additionally comprise at least one additional step comprising coating at least one metal onto at least a part of the surface of the said part.

Should the disclosure of any patents, patent applications, and publications which are incorporated herein by reference conflict with the description of the present application to the extent that it may render a term unclear, the present description shall take precedence.

The invention will be herein after illustrated in greater detail in the following section by means of non-limiting examples.

## EXAMPLES

Two working examples and three corresponding comparative examples are provided. All the compositions prepared and evaluated are shown below in Table 3.

### Raw materials

1) PPS polymer : Ryton® QC160N from Solvay Specialty Polymers USA, LLC.
2) PEEK polymer : KetaSpire® KT-880P from Solvay Specialty Polymers USA, LLC. This grade has a melt viscosity in the range 120-180 Pa-s as measured at 400 °C and 1000 1/s according to ASTM D-3835;
3) Sodium benzenesulfonate, RIA International (NaBzS)
4) Sodium acetate, Fisher Scientific (NaAc)

### Melting temperature of the components

Melting temperatures (Tm) of the various components were measured using differential scanning calorimetry according to ASTM D3418 employing a heating and cooling rate of 20 °C/min. Three scans were used for each DSC test: a first heat up to 400 °C, followed by a first cool down to 50 °C, followed by a second heat up to 400 °C. The Tm was determined from the second heat up as the peak temperature on the melting endotherm. The melting temperatures for the four components used in the examples and comparative examples are tabulated in Table 1.

Table 1

| Components | Tm (°C) |
|---|---|
| PPS - Ryton® QC160N | 280 |
| PEEK - KetaSpire® KT-880P | 340 |
| Sodium benzenesulfonate - RIA International | 318 |
| Sodium acetate - Fisher Scientific | 337 |

### Procedure for the preparation of the membranes

Three different polymer compositions were tested :

Membrane #1 : Blend PEEK/ NaBzS 60/40

Membrane #2 : Blend PPS/NaBzS 50/50

Comparative membrane #1 : Blend PPS/NaAc 50/50

**The following process took place for membrane #1 and membrane #2** :

Selected polymer and additives were pre-dried in oven to eliminate moisture. The combined constituents were added to an Eries Magnetics FT-26 vibratory feeder and fed directly into a Leistritz Mic18G1/30D twin screw corotating compounder with screw speed set to 200 rpm and barrel settings adjusted such that the melt temperature was about 320°C for PPS and 380°C for PEEK. The material was then cooled into strands and pelletized.

The pellets were then fed into a gravity hopper mounted to a DSM Xplore MC15 compounder with 15mL barrel capacity and 1" width film die. The barrel temperatures were adjusted such that the melt temperature was > 320°C for PPS, and 380°C for PEEK with screw speed set to force control. Membranes were collected on a DSM Xplore film winder with roll settings (speed, torque) adjusted to target a 100-200 μm thickness.

For comparative membrane #1, the compounding step led to a phase separation of the components and extruding continuous strands for making pellets was not possible.

**Aqueous extraction of additive after shaping**

The membrane #2 was dried in vacuum and weighed. The membrane was then immersed in an excess of hot water (about 90°C) for 2 hours. The membrane was then dried in vacuum and re-weighed to determine extraction efficiency.

The results can be found in table 2 below :

Table 2

| Initial (g) | Final (g) | % Loss | % Loading | Difference (%) |
|---|---|---|---|---|
| 0.0865 | 0.044 | 49.1 | 50 | 0.9 |

These results show that more than 99 % of the additive has been dissolved during the step of immersion into the hot water, thereby creating pores into the membrane.

**Permeability measurements**

Water flux (J expressed in $1/(m^2xh)$) through each membrane at given pressure, is defined as the volume which permeates per unit area and per unit time. The water flux is calculated by the following equation :

$$J = \frac{V}{A\,\Delta t}$$

wherein :

- $J(1/(m^2xh))$ is the water flux,
- V (1) is the volume of permeate,
- A ($m^2$) is the membrane area, and
- $\Delta t$ (h) is the operation time.

Water flux measurements were conducted at room temperature using a dead-end configuration under a constant nitrogen pressure of 1 bar. Membrane discs with an effective area of 11.3 $cm^2$ were cut from the items stored in water and placed on a metal plate. For each material, flux is the average of at least five different discs.

**Porosity**

Membrane porosity ($\varepsilon m$) was determined according to the gravimetric method. Porosity is defined as the ratio between the volume of voids and the total volume occupied by the membrane. Perfectly dry membrane pieces were weighed and impregnated in isopropylic alcohol (IPA) for 24h; after this time, the excess of the liquid was removed with tissue paper, and membranes weight was measured again. Finally, from the dry and the wet weight of the sample, it is possible to evaluate the porosity of the membrane using the following formula :

$$\varepsilon_m = \frac{(Ww - Wd)/\rho_w}{\frac{(Ww - Wd)}{\rho_w} + \frac{Wd}{\rho_p}} \cdot 100$$

wherein :

- Ww is the weight of the wet membrane,
- Wd is the weight of the dry membrane,
- $\rho_w$ is the IPA density (0.785) and
- $\rho_p$ is the polymer density (1.35 for PPS and 1.3 for PEEK).

For all membranes types, at least three measurements were performed; then, average values and corresponding standard deviations were calculated.

**Bubble point and pore size determination**

Membranes bubble points, smallest pore size and pore size distribution were determined following ASTM F316 method, using a capillary flow porometer Porolux™ 1000 (Porometer-Belgium). For each test, membranes samples were initially fully wetted using Fluorinert® FC 43 (fluorinated fluid with a surface tension of 16 dyn/cm). Nitrogen (inert gas) was used.

Results are presented in Table 3 below.

Table 3

| Membrane | Water flux | Porosity | Thickness | B.P. | Sm. P* | Av. P** |
|---|---|---|---|---|---|---|
| | (1/(m$^2$xh)) | (%) | (μm) | (μm) | (μm) | (μm) |
| #1 | 59 | 36 | 165 | 0.220 | 0.156 | 0.180 |
| #2 | 34 | 52 | 99 | 0.163 | 0.029 | 0.042 |

* Sm. P : smallest pore
** Av. P : average pore

The porous membranes #1 and #2 present good mechanical properties (tensile properties according to ASTM D-638) and good chemical resistance (results not shown).

## Claims

**1.** A polymer composition (C) comprising:

- at least one polymer (P) selected from the group consisting of a polycarbonate (PC) and a fluoropolymer, and
- at least 28 wt. %, based on the total weight of the polymer composition (C), of at least one additive of formula (I):

$R_a$-Ar-$X_b$ (I)

where

- Ar is an aromatic moiety and is selected from the group consisting of substituted or unsubstituted, aromatic monocyclic or polycyclic group having 5 to 18 carbon atoms,
- each of R, identical or different from each other, is selected from the group consisting of a halogen, an hydroxyl, a C1-C18 aliphatic group, a C1-C18 cycloaliphatic group and a C1-C18 aromatic;
- a is zero or an integer ranging from 1 to 5;
- X is $(SO_3^-)$, $(M^{p+})_{1/p}$ or $(COO^-)$, $(M^{p+})_{1/p}$ in which $M^{p+}$ is a metal cation of p valence;
- b is an integer ranging from 1 to 4.

**2.** The polymer composition of claim 1, wherein the additive of formula (I) is such that each of R, identical or different from each other, is selected from the group consisting of a halogen, an hydroxyl and a C1-C3 aliphatic group.

**3.** The polymer composition (C) of any one of claims 1 and 2, wherein Ar in formula (I) is selected from the group consisting of:

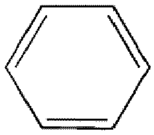

(Ar-A)

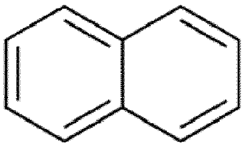

(Ar-B)

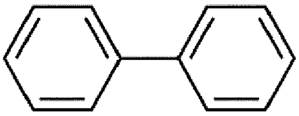

(Ar-C)

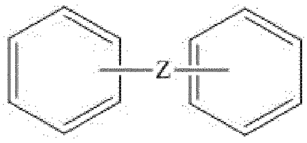

(Ar-D)

wherein Z is a divalent moiety and is selected from the group consisting of-$SO_2$-, -CO- and alkylenes of 1 to 6 carbon atoms.

**4.** The polymer composition (C) of any one of claims 1 to 3, wherein the additive is such that a is 0, 1 or 2.

**5.** The polymer composition (C) of any one of claims 1 to 4, wherein the additive has a melting point Tma (°C) of at least 150°C, as measured by differential scanning calorimetry (DSC) according to ASTM D3418.

**6.** The polymer composition (C) of any one of claims 1 to 5, wherein the polymer (P) is semi-crystalline and the additive has a melting point Tma (°C) such that

$$\mathrm{Tmp} - 50 \leq \mathrm{Tma} \leq \mathrm{Tmp} + 50$$

wherein Tmp (°C) is the melting point of the semi-crystalline polymer, as measured by differential scanning calorimetry (DSC) according to ASTM D3418.

**7.** The polymer composition (C) of any one of claims 1 to 6, wherein the additive is according to formula (II):

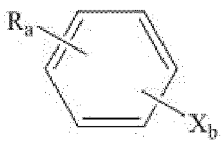

(II)

where

- each of R, identical or different from each other, is selected from the group consisting of a halogen, an hydroxyl, a C1-C18 aliphatic group, a C1-C18 cycloaliphatic group and a C1-C18 aromatic;

- a is zero or an integer ranging from 1 to 5;
- X is $(SO_3^-)$, $(M^{p+})_{1/p}$ or $(COO^-)$, $(M^{p+})_{1/p}$ in which $M^{p+}$ is a metal cation of p valence;
- b is each of either 1 or 2.

**8.** The polymer composition (C) of any one of claims 1 to 7, wherein the additive salt is selected from the group consisting of benzoate, methylbenzoate, ethylbenzoate, propylbenzoate, benzene sulfonate, benzene disulfonate, p-toluene sulfonate, xylene sulfonate, cumene sulfonate, p-cymene sulfonate and dodecylbenzene sulfonate.

**9.** The polymer composition (C) of any one of claims 1 to 8, comprising between 30 wt. % and 70 wt. % of the additive.

**10.** A polymer article (A) comprising the polymer composition (C) of any one of claims 1 to 9.

**11.** A method of forming a porous polymer membrane (M), comprising:

(i) preparing a polymer composition (C) according to any one of claims 1 to 9,
(ii) processing the polymer composition (C) into a membrane,
(iii) immersing the membrane into water.

**12.** A porous polymer membrane (M) obtainable by the process of claim 11.

**13.** Use of the porous polymer membrane (M) of claim 12 for filtering or purifying fluids, such as liquids or gas.

**14.** Use of the porous polymer membrane (M) of claim 12 as a separator in batteries, such as Li-ion batteries.

**15.** Use of the porous polymer membrane (M) of claim 12 as a diaphragm for electrolizer for the production of dihydrogen.

Europäisches Patentamt
European Patent Office
Office européen des brevets

# EUROPEAN SEARCH REPORT

Application Number
EP 21 16 2506

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 746 125 A1 (NTN TOYO BEARING CO LTD [JP]) 24 January 2007 (2007-01-24)<br>* claims 1,5,6,11 *<br>* paragraph [0116]; example 11 *<br>----- | 1-12 | INV.<br>C08J9/26<br>C08K5/098<br>C08K5/42<br>B01D67/00<br>H01M50/40 |
| X | US 4 196 070 A (CHAO KWANG C [US] ET AL) 1 April 1980 (1980-04-01)<br>* claims 1,10,11 *<br>* examples 1-10 *<br>----- | 1-15 | |
| X | US 2007/232502 A1 (TSUTSUI HIDEYUKI [JP] ET AL) 4 October 2007 (2007-10-04)<br>* claim 1 *<br>* paragraph [0051] *<br>* paragraph [0138] *<br>----- | 1-15 | |
| A | GB 980 229 A (GEN ELECTRIC) 13 January 1965 (1965-01-13)<br>* claims 1,7,8,21 *<br>* page 3, left-hand column, line 101 - page 4, left-hand column, line 60 *<br>* page 3, left-hand column, line 6 - line 29 *<br>* page 6, left-hand column, line 15 - right-hand column, line 80 *<br>----- | 1-15 | TECHNICAL FIELDS SEARCHED (IPC)<br>C08J<br>C08K<br>H01M<br>B01D |
| A | US 3 852 224 A (BRIDGEFORD D) 3 December 1974 (1974-12-03)<br>* claim 1 *<br>* column 1, paragraph 45 - column 2, paragraph 31 *<br>----- | 1-15 | |

The present search report has been drawn up for all claims

1

| Place of search | Date of completion of the search | Examiner |
|---|---|---|
| The Hague | 5 July 2021 | Costantini, Nicola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

Application Number
EP 21 16 2506

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☒ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches Patentamt
European Patent Office
Office européen des brevets

## LACK OF UNITY OF INVENTION SHEET B

Application Number
EP 21 16 2506

The Search Division considers that the present European patent application does not comply with the requirements of unity of invention and relates to several inventions or groups of inventions, namely:

1. claims: 1-15

Polymer composition comprising a thermoplastic polymer and at least 28 wt.% based on the total weight of the polymer composition of at least one additive having formula (I):Ra- Ar - Xb (I) where- Ar is an aromatic moiety and is selected from the group consisting of substituted or unsubstituted, aromatic monocyclic or polycyclic group having 5 to 18 carbon atoms,- each of R, identical or different from each other, is selected from the group consisting of a halogen, an hydroxyl, a C1 -C18 aliphatic group, a C1 -C18 cycloaliphatic group and a C1-C18 aromatic;- a is zero or an integer ranging from 1 to 5;- X is an anionic group neutralised by metal cation;- b is an integer ranging from 1 to 4.

1.1. claims: 1-15(partially)

A polymer composition comprising a thermoplastic polymer and at least 28 wt.% based on the total weight of the polymer composition of at least one additive having formula (I):
Ra- Ar - Xb (I) wherein
- X is (SO3-), (Mp+)1/p in which Mp+ is a metal cation of p valence and the at least one polymer (P) is selected from a polycarbonate. A microporous membrane is obtained by leaching the additive.

1.2. claims: 1-15(partially)

A polymer composition comprising a thermoplastic polymer and at least 28 wt.% based on the total weight of the polymer composition of at least one additive having formula (I):
Ra- Ar - Xb (I) wherein
- X is (SO3-), (Mp+)1/p in which Mp+ is a metal cation of p valence and the at least one polymer (P) is selected from a fluoropolymer. A microporous membrane is obtained by leaching the additive.

1.3. claims: 1-15(partially)

A polymer composition comprising a thermoplastic polymer and at least 28 wt.% based on the total weight of the polymer composition of at least one additive having formula (I):
Ra- Ar - Xb (I) wherein
- X is (COO-), (Mp+)1/p in which Mp+ is a metal cation of p valence and the at least one polymer (P) is selected from a fluoropolymer or polycarbonate. A microporous membrane is obtained by leaching the additive.

---

Please note that all inventions mentioned under item 1, although not

Europäisches Patentamt
European Patent Office
Office européen des brevets

# LACK OF UNITY OF INVENTION SHEET B

Application Number
EP 21 16 2506

The Search Division considers that the present European patent application does not comply with the requirements of unity of invention and relates to several inventions or groups of inventions, namely:

necessarily linked by a common inventive concept, could be searched without effort justifying an additional fee.

# ANNEX TO THE EUROPEAN SEARCH REPORT ON EUROPEAN PATENT APPLICATION NO. EP 21 16 2506

This annex lists the patent family members relating to the patent documents cited in the above-mentioned European search report. The members are as contained in the European Patent Office EDP file on
The European Patent Office is in no way liable for these particulars which are merely given for the purpose of information.

05-07-2021

| Patent document cited in search report | | Publication date | Patent family member(s) | | | Publication date |
|---|---|---|---|---|---|---|
| EP 1746125 | A1 | 24-01-2007 | CN | 1946783 | A | 11-04-2007 |
| | | | EP | 1746125 | A1 | 24-01-2007 |
| | | | US | 2008032112 | A1 | 07-02-2008 |
| | | | WO | 2005103128 | A1 | 03-11-2005 |
| US 4196070 | A | 01-04-1980 | NONE | | | |
| US 2007232502 | A1 | 04-10-2007 | US | 2007232502 | A1 | 04-10-2007 |
| | | | WO | 2005121288 | A1 | 22-12-2005 |
| GB 980229 | A | 13-01-1965 | NONE | | | |
| US 3852224 | A | 03-12-1974 | NONE | | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5064580 A
- US 6887408 B